# EUROPÄISCHE PATENTSCHRIFT

(11) **EP 2 523 915 B1**
(45) Veröffentlichungstag und Bekanntmachung des Hinweises auf die Patenterteilung: **11.01.2017**
(21) Anmeldenummer: 11700802.9
(22) Anmeldetag: 14.01.2011
(51) Int. Cl.: C03C 1/00, C03C 17/36, C03C 17/38

(54) **GLAS- ODER GLASKERAMIKVERBUNDMATERIAL SOWIE VERFAHREN ZU DESSEN HERSTELLUNG**
GLASS OR GLASS-CERAMIC COMPOSITE MATERIAL, AND METHOD FOR THE PRODUCTION THEREOF
PROCÉDÉ DE FABRICATION D'UNE VITRE À SURFACE TEXTURÉE ET VITRE À SURFACE TEXTURÉE

(30) Priorität: 14.01.2010 DE 102010004741
(43) Veröffentlichungstag der Anmeldung: 21.11.2012
(73) Patentinhaber: Schott AG, 55122 Mainz (DE)
(72) Erfinder: HENZE, Inka, 55268 Nieder-Olm (DE); SPENGLER, Stefan, 55257 Budenheim (DE); BOCKMEYER, Matthias, 55116 Mainz (DE); RUDIGIER-VOIGT, Eveline, 55128 Mainz (DE); SWEECK, Tamara, 55583 Bad Münster (DE); GROS, Oliver, 55494 Rheinböllen (DE)
(74) Vertreter: Herden, Andreas F.
(86) Internationale Anmeldenummer: PCT/EP2011/000140
(87) Internationale Veröffentlichungsnummer: WO 2011/085995

(56) Entgegenhaltungen:
- EP-A1- 1 174 258
- EP-A1- 2 327 482
- EP-A2- 1 016 637
- WO-A1-00/10929
- WO-A1-92/14270
- WO-A1-98/26315
- WO-A1-2009/118552
- WO-A1-2010/081531
- WO-A2-99/06873
- WO-A2-2004/104082
- WO-A2-2009/004560
- DE-A1- 4 130 550
- DE-A1- 10 314 070
- DE-U1-202004 015 925
- FR-A1- 2 894 328
- FR-A3- 2 914 630
- JP-A- 2006 150 807
- JP-B2- 2 679 454
- US-A- 5 766 680
- US-A1- 2004 038 081
- US-A1- 2004 191 575
- US-A1- 2005 122 588
- US-A1- 2006 292 345
- US-A1- 2007 245 772
- KRUG H ET AL: "Fine patterning of thin sol-gel films", JOURNAL OF NON-CRYSTALLINE SOLIDS, NORTH-HOLLAND PHYSICS PUBLISHING. AMSTERDAM, NL, Bd. 147-148, 1. Januar 1992 (1992-01-01), Seiten 447-450, XP022755347, ISSN: 0022-3093, DOI: DOI:10.1016/S0022-3093(05)80656-8 [gefunden am 1992-01-01]

## Beschreibung

### Gebiet der Erfindung

Die Erfindung betrifft ein dekoratives Verbundmaterial sowie ein Verfahren zu dessen Herstellung, insbesondere betrifft die Erfindung die Herstellung eines Glas- oder Glaskeramikverbundmaterials. Im Speziellen betrifft die Erfindung ein Verbundmaterial, welches die Anmutung von gebürstetem Edelstahl aufweist.

### Hintergrund der Erfindung

Glaselemente, welche zumindest abschnittsweise die Anmutung von Stahl, insbesondere Edelstahl aufweisen, sind bekannt. Derartige Glaselemente werden beispielsweise im Küchenbereich, insbesondere bei Öfen oder für Verglasungen im Architekturbereich wie Türen verwendet. Dabei kann beispielsweise eine transparente Glas- oder Glaskeramikscheibe im Randbereich mit einer metallartig anmutenden Oberfläche versehen sein, so dass der Eindruck entsteht, dass die Scheibe in Metall eingefasst ist.

Um eine solche metallartige Anmutung zu erreichen, ist es aus der Praxis beispielsweise bekannt, eine Metallfolie oder eine Folie mit metallartiger Anmutung aufzulaminieren.

Diese Folie ist in der Regel strukturiert und kann so der Anmutung von gebürstetem Edelstahl nahekommen. Auf der Vorderseite, also der Seite, mit welcher der Benutzer in Kontakt kommt, angebracht, wird eine derartige Folie schnell mechanisch beschädigt oder löst sich vom Glassubstrat ab.

Auf die Rückseite aufgebracht wird die Folie zwar mechanisch nicht stark belastet, aufgrund der in der Küche und speziell bei Kochgeräten verstärkt auftretenden hohen Feuchtigkeiten, kommt es bei einem solchen Verbund leicht zu Delamination. Rahmenlose Verbunde zeigen von den Kanten ausgehend häufig Delaminationseffekte.

Weiterhin bekannt sind dem Fachmann dekorative strukturierte Verbunde durch Mehrfachbedruckung analog der Dekorherstellung für Laminatfußböden. Hier werden Strukturen durch unterschiedlich farbige Dekordrucke erzielt. Der optische Eindruck ist aufwendig zu erreichen und ist auf eine Ansichtseite beschränkt. Zudem ist es äußerst aufwändig, mittels eines herkömmlichen Druckverfahrens eine strukturierte Beschichtung aufzubringen, welche eine metallartige Anmutung hat.

### Aufgabe der Erfindung

Der Erfindung liegt dem gegenüber die Aufgabe zugrunde, ein Verfahren bereitzustellen, mittels dessen sich auf einfache Weise ein Substrat, insbesondere ein Glas- oder Glaskeramiksubstrat mit einer dekorativen, strukturierten Beschichtung herstellen lässt.

Insbesondere soll ermöglicht werden, ein Substrat bereit zu stellen, dessen Anmutung matt gebürsteter Edelstahl ist.

### Beschreibung der Erfindung

Die Aufgabe der Erfindung wird bereits durch ein Verfahren zur Herstellung eines Verbundmaterials sowie durch ein Verbundmaterial nach einem der unabhängigen Ansprüche gelöst.

Bevorzugte Ausführungsformen oder Weiterbildungen der Erfindung sind den jeweiligen Unteransprüchen zu entnehmen.

Die Erfindung betrifft ein Verfahren zur Herstellung eines dekorativen Verbundmaterials, insbesondere eines Glas- oder Glaskeramikverbundmaterials mit zumindest teilweise zwei aufeinander angeordneten Schichten.

Gemäß dem Verfahren wird eine Sol-Gel-Schicht auf einem, vorzugsweise transparenten, Substrat aufgebracht. Neben dem vorzugsweise verwendeten Glas- oder Glaskeramiksubstrat kann beispielsweise auch ein Kunststoffsubstrat, insbesondere ein transparentes Kunststoffsubstrat, verwendet werden.

Sol-Gel-Schichten sind definitionsgemäß anorganisch aufgebaute und im Sol-Gel-Prozess hergestellte Schichten oder Hybridpolymerschichten, die neben den anorganischen Komponenten auch organische Netzwerke oder organische Additive aufweisen. Wahlweise können der Sol-Gel-Schicht Polysiloxane zugegeben werden. Die Synthese solcher Schichtmaterialien ist dem Fachmann bekannt.

Gemäß der Erfindung wird die Sol-Gel-Schicht strukturiert. Unter Strukturieren wird das Herstellen einer dreidimensional gestalteten Oberfläche verstanden, also eine Oberfläche, welche nicht glatt ausgebildet ist.

Sodann wird eine zumindest ein Metall umfassende Schicht auf die strukturierte Sol-Gel-Schicht aufgebracht, welche eine dekorative Anmutung erzeugt.

Definitionsgemäß im Sinne der Erfindung ist eine Metall umfassende Schicht eine metallische Schicht beziehungsweise eine Schicht, die zumindest teilweise Metall oder metallisch anmutende Komponenten enthält, oder eine Schicht, die aufgrund einer Pigmentierung eine metallische Anmutung aufweist, insbesondere ein Dekor oder ein Lacksystem, oder optische Mehrschichtsysteme, die aufgrund von Einzelschichten unterschiedlicher optischer Eigenschaften reflektierende und / oder farbige Eigenschaften aufweisen.

Auch kann eine Lüsterfarbe verwendet werden. Es handelt sich dabei in der Regel um gelöste Metallresinate, aus denen sich bei höheren Temperaturen eine dünne Metalloxydschicht mit farbiger oder metallischer Anmutung bildet.

Auch die Verwendung eines Metall- oder Metalloxidpartikel haltigen Lacks ist denkbar.

Die Erfinder haben herausgefunden, dass sich über eine strukturierte Sol-Gel-Schicht ein Relief bereitstellen lässt, welches Strukturen wie beispielsweise die von gebürstetem Metall umfassen kann und welches als Träger für eine Metall umfassende Schicht dient, mittels der sich die Anmutung von Metall erreichen lässt. Dabei kann aufgrund des verwendeten Verfahrens, wie es auch bspw. für laminierte Folien der Fall ist, gewährleistet werden, dass die bereitgestellten Gegenstände identische Strukturen aufweisen. Grundsätzlich ist es möglich, auch Strukturen kleiner als 100 nm zu realisieren.

Sol-Gel-Schichten gehen aufgrund ihrer anorganischen, reaktiven Bestandteile in der Regel eine wesentlich bessere, insbesondere chemische, Verbindung zu Glas- oder Glaskeramikoberflächen ein als dies beispielsweise bei auflaminierten Folien oder aufgetragenen dicken Schichten aus Lack der Fall ist.

Das erfindungsgemäß hergestellte Verbundmaterial zeichnet sich daher durch eine hohe mechanische Beständigkeit sowie durch eine einfache Herstellung aus.

Die definitionsgemäßen Sol-Gel-Materialien können mit dem Fachmann bekannten Verfahren, wie Flüssigphasenbeschichtungs-Verfahren, beispielsweise Tauchen, Sprühen, Spin-Coaten, Tampondruck, Inkjet, Rollenbeschichtung, Schlitzgießen, Siebdruck, DoD-(Drop-on-Demand)-Druck, etc. appliziert werden. Besonders bevorzugt sind Verfahren, die das Substrat wahlweise vollflächig oder teilweise beschichten können.

In einer besonderen erfindungsgemäßen Ausführungsform kann die strukturierte Schicht auch über eine Transfertechnologie aufgebracht werden.

In einer besonderen Ausführungsform der Erfindung wird die Sol-Gel-Schicht vor dem Strukturieren vorgehärtet, insbesondere thermisch oder mittels eines photochemischen Prozesses.

Definitionsgemäß erfolgt die Strukturierung der Sol-Gel-Schichten mit Hilfe eines Prägeprozesses.

Die Vorhärtung der Schicht kann beispielsweise dazu dienen, dass deren Viskosität steigt, so dass sich aufgebrachte Strukturen nicht selbst nivellieren, sondern besser in die Schicht übertragen werden. Es ist vorgesehen, die Schicht während des Kontakts mit einem Prägewerkzeug, mittels dessen die Struktur in die Schicht gebracht wird, photochemisch zu härten. Für die Herstellung des Prägewerkzeugs, im Weiteren als Prägestempel bezeichnet, wird zunächst ein Master benötigt, welcher die gewünschte Struktur aufweist. Ein solcher Master kann beispielsweise über Lithographieprozesse hergestellt werden oder einfach ein Werkstück mit einer Oberflächenstruktur sein. Dieser Master wird dann mit einer Polymermasse bedeckt und so abgeformt.

In einer besonderen Ausführungsform wird zur Prägestempelherstellung ein Metallstück mit einer gebürsteten Edelstahloberfläche gewählt. Die gewünschten Strukturen können aber auch von allen sonst denkbaren Substraten übertragen werden, wie beispielsweise Holz, Kunststoff, Glas, Keramik, Metall, Stoff etc.. Insbesondere kann eine Silikonformmasse verwendet werden, welche auf eine Vorlage gegossen und ausgehärtet wird. Die Aushärtung kann beispielsweise thermisch erfolgen. Silikonformmassen sind jedoch, wie dem Fachmann bekannt ist, auch über längere Zeit bei Raumtemperatur aushärtbar. Zur Reduzierung von Blasenbildung kann, wie es bei einer Ausführungsform der Erfindung vorgesehen ist, unter Unterdruck gearbeitet werden. Typische Unterdrücke sind < 1 bar, insbesondere im Bereich von 0,9 *.10⁻¹ bis 1 * 10⁻² bar.

Die ausgehärteten Prägestempel aus Polymermaterial können von der Vorlage abgezogen werden und sind nunmehr einsatzbereit, um als Prägestempel verwendet zu werden. Von Vorteil ist, dass derartige Polymerprägestempel nach entsprechender Reinigung mit beispielsweise Alkohol oder einem alkoholischen Bad oder basischen Reinigern wieder verwendbar sind.

In einer anderen Ausführungsform können solche Prägestempel auch über Prägen eines Lackes, der vorher auf einer transparenten Folie aufgebracht wurde, mit einer Masterstruktur hergestellt werden. Diese Prägefolie, die insbesondere transparent für UV-Licht ist, besteht vorzugsweise aus Materialien wie PMMA oder Polyacrylaten.

Nunmehr wird bei der Erfindung der Prägestempel auf die Sol-Gel-Schicht aufgedrückt und dabei gleichzeitig die Sol-Gel-Schicht derart vorgehärtet, dass diese formstabil ist und die eingeprägten Strukturen erhalten bleiben.

In einer alternativen Ausführungsform wird kein Druck benötigt, da sich das Sol von selbst in die Struktur des Stempels zieht. Das Sol zieht sich über Kapilliarkräfte bzw. das Eigengewicht des Stempels in die Struktur hinein

Dies wird auch durch die spezielle Viskosität und die hohe Plastizität des Lackes bedingt. Die Lacke zeichnenen sich durch eine geringe Tixotropie aus, was das "von selbst in die Struktur ziehen begünstigt". Die Lacke verhalten sich weiterhin eher newtonisch, das bedeutet die Schubspannung verhält sich proportional zum Schergefälle.

Typische Viskositäten für die verwendeten Lacke liegen von 50 mPas bis 2500 mPas, bevorzugt von 75 mPas bis 500 mPas, besonders bevorzugt von 100 mPas bis 300 mPas. Alle Werte wurden bei einer Schubspannung von 85 N/m2 bestimmt.

In einer besonderen Ausführungsform wird der Prägestempel, ähnlich einem Laminationsprozess, von einer Seite beginnend aufgelegt und optional mit Druck auf die zu prägende Schicht aufgerollt. Der Verbund Substrat/Sol-Gel-Schicht/Prägestempel wird dann vorgehärtet und anschließend entfernt.

Die Vorhärtung erfolgt mittels eines zugesetzten Photoinitiators und der Verwendung von UV-Licht. Nach Entfernung des Prägestempels kann die so erhaltene geprägte Sol-Gel-Schicht nochmals thermisch ausgehärtet werden.

Bei einer bevorzugten Ausführungsform der Erfindung wird als Metall umfassende Schicht eine Metallschicht abgeschieden, insbesondere mittels eines PVD- oder CVD-Verfahrens. Durch Abscheideverfahren lassen sich sehr dünne und damit gut haftende Schichten bereitstellen.

Gleichzeitig wird durch ein Abscheideverfahren die Neigung der Schicht, Täler der Struktur mit Material aufzufüllen, weitgehend vermieden oder zumindest reduziert.

Das Abscheiden kann beispielsweise mittels eines Sputterverfahrens erfolgen. Mittels eines solchen Sputterverfahrens ist es möglich insbesondere auch Legierungen mit im Wesentlichen gleichbleibender Zusammensetzung von einem Target auf das Verbundmaterial zu übertragen.

In einer weiteren Ausführungsform wird anstelle der Metallschicht ein mehrschichtiges optisches Schichtpaket abgeschieden. Dieses Schichtpaket ist so aufgebaut, dass reflektierende, spiegelnde Eigenschaften oder / und farbige Effekte erzielt werden können.

Definitionsgemäß enthält die Metall umfassende Schicht Metalle, wie Chrom, Eisen, Silber, Gold, Aluminium, Molybdän, Wolfram, Kupfer, Cobalt, Zink, Mangan, Nickel, Bismut, Rhodium, Platin, Metalllegierungen, wie Edelstähle, Bronze, Halbmetalle, wie, Silizium, oder oxidischen, carbidische oder nitridischen Metalle oder Halbmetalle.

Erfindungsgemäß sind Mischungen sowohl innerhalb einer Schicht als auch in Mehrschichtern möglich.

Es versteht sich, dass unter einer Metallschicht nicht eine Schicht verstanden wird, welche nur aus Metall besteht, sondern dass die Metallschicht auch nichtmetallische Zusätze enthalten kann.

Alternativ ist aber auch denkbar, auf die strukturierte Sol-Gel-Schicht einen Lack aufzubringen, welcher metallische und oder halbmetallische und oder metalloxidische, -carbidische und oder -nitridische und oder fluoridische Partikel und oder Partikel bestehend aus Graphit, BN umfasst und so eine metallische Anmutung aufweist.

Bevorzugt werden Nanopartikel mit einer Größe von 0,1 - 100 nm eingesetzt.

Bei einer Weiterbildung der Erfindung werden dem für die Sol-Gel-Schicht verwendeten Sol Partikel, insbesondere Nanopartikel, zugesetzt. Beispielsweise können Oxidpartikel von Metall- oder Halbmetalloxiden zugesetzt werden. Die Partikelgröße liegt bei einer bevorzugten Ausführungsform der Erfindung zwischen 0,05 und 100 nm, bevorzugt zwischen 1 und 80 nm. Als Partikel können sowohl amorphe als auch kristalline Partikel verwendet werden und die Partikelform ist nicht eingeschränkt, es können sowohl kugelförmige als auch irreguläre Partikel verwendet werden.

In einer besonderen erfindungsgemäßen Ausführungsform werden für die Sol-Gel-Schicht faserförmige Nanopartikel eingesetzt.

Durch die zugesetzten Partikel wird zum einen eine höhere Formstabilität der Sol-Gel-Schicht während und nach Durchführung des Prägeverfahrens erreicht. Aufgrund der Größe der Partikel ist die Transparenz der Sol-Gel-Schicht gewährleistet.

Zum anderen wird vorzugsweise eine hohe Menge an Partikeln verwendet, so dass das Sol letztendlich als Kleber verwendet wird, welches die einzelnen Partikel verbindet.

Insbesondere beträgt das Volumenverhältnis von Partikeln zu Vorprodukt des Sols 0,1 bis 0,9, bevorzugt 0,5 bis 0,8. Es kann somit auch eine Schicht aufgebracht werden, welche überwiegend aus Partikeln besteht. Hierdurch wird die Gefahr der Rissbildung beim Schrumpfen des Sols reduziert und es können hinreichend dicke Schichten aufgebracht werden, um eine Strukturierung einzubringen. Insbesondere können Schichtdicken von 50 nm bis 1 mm, bevorzugt von 100 nm bis 100 µm, besonders bevorzugt von 150 nm bis 10 µm aufgebracht werden.

Bei einer Weiterbildung der Erfindung wird die Sol-Gel-Schicht vorzugsweise vor dem Aufbringen der ein Metall umfassenden Schicht thermisch gehärtet, insbesondere bei 50 bis 1000 °C, bevorzugt bei 100 bis 800 °C und besonders bevorzugt bei 450 bis 740°C.

Es ist insbesondere vorgesehen, die thermische Härtung bei Temperaturen durchzuführen, in welcher organische Bestandteile des Sols weitgehend entfernt werden. Es bleibt dann eine überwiegend anorganisch ausgebildete Schicht zurück, welche sowohl mechanisch als auch thermisch sehr beständig ist.

Bei einer Ausführungsform ist der organische Anteil kleiner 5 Gew.%, bevorzugt kleiner 1 Gew%, besonders bevorzugt kleiner 0,1 Gew%.

In einer weiteren Ausführungsform enthält die geprägte Sol-Gel-Schicht hochtemepraturstabile Restorganik, wie beispielsweise Methyl-, oder Phenylsilangruppen.

Die verwendeten Sol-Gel-Schichten sind bei einer Ausführungsform der Erfindung derart temperaturbeständig, dass ein Glas- oder Glaskeramiksubstrat mit bereits aufgebrachter Sol-Gel-Schicht vorgespannt werden kann. So kann beispielsweise eine thermische Härtung der Sol-Gel-Schicht in einem Vorspannprozess erfolgen, wodurch der potentiell zusätzliche Herstellungsschritt für die thermische Härtung entfällt.

Die verwendeten Sol-Gel-Schichten sind in einer Ausführungsform derart gestaltet, dass sie eine Temperaturbeständigkeit von mindestens 250°C, bevorzugt von mindestens 400°C, besonders bevorzugt von mindestens 600°C, ganz besonders bevorzugt von mindestens 800°C aufweisen.

Bei einer Weiterbildung der Erfindung wird die Sol-Gel-Schicht auf das Substrat gedruckt, insbesondere mittels eines Siebdruckverfahrens.

Es ist insbesondere vorgesehen, die Oberfläche des Substrates abschnittsweise zu bedrucken, wobei zumindest ein Bereich der Oberfläche ausgespart ist.

Diese Ausführungsform der Erfindung hat den Vorteil, dass Bereiche, welche nicht mit einer dekorativen Anmutung versehen werden sollen, nicht mit der Sol-Gel-Schicht beschichtet werden müssen, so dass aufwändige Kontrollen der Oberfläche in diesen Bereichen entfallen.

Um ein siebdruckfähiges Lacksystem bereitzustellen, werden vorzugsweise Sol-Gel-Vorstufen mit niedrigem Lösungsmittelgehalt verwendet, insbesondere werden Lösungsmittel mit einem geringen Dampfdruck kleiner als 2 bar verwendet.

Es kann statt eines leichtflüchtigen Alkohols ein anderes Lösungsmittel, insbesondere Ethylenmonoethyläther und/oder Terpineol und oder Diethylenglycolmonoethylether und/oder Tripropylenglycolmonomethylether verwendet werden.

Es ist auch denkbar bei Verwendung eines Druckverfahrens das Substrat nur abschnittsweise mit einer Strukturierung zu versehen, wobei aber der Prägestempel oder die Walze auch mit Bereichen in Kontakt kommt, in denen keine Strukturierung vorgesehen ist, da sich in diesem Bereich keine Sol-Gel-Schicht befindet. So kann beispielsweise das gesamte Glassubstrat inline unter einer Walze entlang geführt werden.

In einer besonderen Ausführungsform kann der Prägestempel auch so ausgebildet sein, dass er zumindest zwei unterschiedliche Muster enthält.

In einer weiteren Ausführungsform kann das Prägewerkzeug auch eine Folie sein, die transparent für UV-Licht ist und vorzugsweise aus Materialien wie PMMA oder Polyacrylaten besteht.

Die Erfindung betrifft des Weiteren ein Verbundmaterial, welches insbesondere mit dem zuvor beschriebenen Verfahren herstellbar ist oder hergestellt wird.

Das Verbundmaterial umfasst ein vorzugsweise transparentes Substrat, insbesondere ein Glas- oder Glaskeramiksubstrat.

Auf dem Substrat ist eine mittels eines Sol-Gel-Verfahrens hergestellte Schicht angeordnet, welche zumindest teilweise anorganisch ausgebildet ist.

Die vorzugsweise anorganisch ausgebildete Schicht ist strukturiert, weist also ein dreidimensionales Muster auf und auf der anorganisch ausgebildeten Schicht ist eine Metall umfassende Schicht angeordnet.

In einer besonderen Ausführungsform kann die ein Metall umfassende Schicht mit weiteren Schichten versehen sein, wie beispielsweise einer Oxidschicht, einer Silikonfarbe, einer keramische Farbe, einer Schutzschicht gegenüber Kratzern oder Kombination dieser Schichten. Auch die Aufbringung von Antireflex-Schichten oder Barriereschichten, die beispielsweise eine Oxidation der Metall umfassenden Schicht bei höheren Temperaturen verhindern, ist denkbar.

Durch die anorganisch ausgebildete Schicht, welche insbesondere Metall- und/oder Halbmetalloxide enthält, lässt sich eine gute, insbesondere chemische, Verbindung, insbesondere zu einem Glas- oder Glaskeramiksubstrat herstellen.

Die darauf angeordnete ein Metall umfassende Schicht kann dünn ausgebildet sein, da sie lediglich dekorativ sein sollte und außer der Bereitstellung eines optischen Effektes keine weiteren Funktionen hat. Diese Schichten können semitransparent oder opak ausgebildet sein.

Die ausgebildete strukturierte Schicht kann dagegen eine hohe Strukturtiefe haben, insbesondere kann die Strukturtiefe zwischen 0,5 nm und 1 mm, vorzugsweise zwischen 5 nm und 10 µm, ganz besonders bevorzugt zwischen 50 nm - 4 µm betragen.

Die ausgebildete strukturierte Schicht eignet sich daher als Träger nahezu aller Varianten an Mustern. Insbesondere kann die ausgebildete Schicht die Struktur eines gebürsteten Metalls haben.

Bei einer weiteren Ausführungsform der Erfindung beträgt die Schichtdicke der vorzugsweise anorganisch ausgebildeten Schicht zwischen 0,05 und 10 µm.

Die Metall umfassende Schicht kann dünn ausgebildet sein, insbesondere beträgt die Dicke zwischen 10 nm und 30 µm, bevorzugt zwischen 5 nm und 1 µm und besonders bevorzugt zwischen 100 nm und 800 nm. Dies wird bevorzugt bei metallischen Schichten oder Mehrschichtsystemen erzielt.

Bei einer weiteren Ausführungsform wird die dekorative Schicht über Lacke erzeugt. Die Lacke können metallisch anmutende Pigmente enthalten oder reaktiv metallische Schichten erzeugen.

Metallische anmutende Pigmente sind Partikel, die des Licht reflektieren. Bevorzugt sind Edelmetalle, wie Gold, Silber, Rhodium, Platin, Iridium, Metalle wie Zink, Eisen, Nickel, Mangan, Chrom, Kupfer, Reflexpigmente, die Aluminium, Glimmer oder Effektpigmente, (beispielsweise der Fa. Merck Iriodine, oder Graphit enthalten.

In einer weiteren Ausführungsform wird die metallisch anmutende Schicht über keramische Farben hergestellt. Keramische Farben sind dem Fachmann bekannt und enthalten beispielsweise Lösungsmittel, Flussmittel, und Pigmente.

Bei einer Weiterbildung der Erfindung ist die Brechzahl der Sol-Gel-Schicht der Brechzahl des Substrats, insbesondere des Glas- oder Glaskeramiksubstrats angepasst und unterscheidet sich weniger als 0,3, vorzugsweise weniger als 0,2.

Das erfindungsgemäße Verbundmaterial kann auf zwei Arten dem Betrachter zugewandt sein.

In einer Ausführungsform befindet sich der Schichtverbund hinter dem Substrat, also beispielweise bei einem Küchengerät nicht auf der Vorderseite, sondern auf der dem Betrachter abgewandten Seite des Substrats.

Mit dieser Ausführungsform der Erfindung wird eine außergewöhnliche Anmutung erzeugt, da der Eindruck entsteht, dass die Metall umfassende Schicht strukturiert ist und nicht das Glas. Es lässt sich beispielsweise die Anmutung einer mit Glas überzogenen Edelstahlplatte erzeugen.

Auch lässt sich der Eindruck einer schwarzen gebürsteten Metalloberfläche erzielen.

Hierzu sollte das Substrat transparent sein und sich die Brechzahl der Sol-Gel-Schicht von der Brechzahl des Substrates um weniger als 0,3 unterscheiden.

Diese Ausführungsform mit einer ein Metall umfassenden Schicht auf der Rückseite hat den Vorteil, dass die Struktur vor mechanischen Kontakten geschützt ist. An die mechanischen Eigenschaften sind somit geringere Anforderungen zu stellen. Es sind darüber hinaus auch metallisch anmutende Dickschichten, beispielsweise aus einem Lack, möglich, da die Schicht die Struktur der Sol-Gel-Schicht auffüllen darf ohne die optische Anmutung der Struktur zu zerstören. Des Weiteren können zusätzliche Schichten auf die metallisch anmutende Schicht aufgebracht werden, wie bspw. Diffussionbarrieren, keramische oder auf Silikon-basierte Farben.

In einer anderen Ausführungsform befindet sich der Schichtverbund auf der Vorderseite des Substrats. Mit dieser Anordnung kann neben der besonderen optischen Eigenschaft auch die haptische Eigenschaft, beispielsweise von gebürstetem Edelstahl, zum Tragen kommen. Auch bei dieser Anordnung können zusätzliche Schichten auf die metallisch anmutende Schicht aufgebracht werden, wie bspw. Kratzschutzschicht, Diffusionsbarrieren, AR- Schichten o.ä..

Hierzu sollte eine dünne dekorative Schicht vorhanden sein, die der Struktur der Sol-Gel-Schicht folgt und diese nicht füllt.

Vorzugsweise wird bei dieser Ausführungsform der Erfindung eine transparente Schutzschicht auf die dekorative anmutende Schicht aufgebracht, welche einer verbesserten mechanischen und/oder chemischen Beständigkeit dient.

Mit dieser Ausführungsform der Erfindung lässt sich die Anmutung einer Vielzahl verschiedener dekorativer Strukturen nachbilden. Das Aussehen der Schicht wird nicht durch die spiegelnde Oberfläche des Substrats oder durch dessen Färbung gestört.

In einer Ausführungsform ist der Schichtverbund so aufgebaut, dass die erste Schicht eine geprägte Sol-Gel-Schicht mit einer gebürsteten Edelstahl-Struktur aufweist und die zweite Schicht eine dekorative metallische Schicht ist. Bevorzugt wird ein thermisch beständiges Edelstahl verwendet.

In allen genannten Ausführungsformen kann die Oberfläche des Substrats vorbehandelt sein. Definitionsgemäß wird unter einer Vorbehandlung eine Reinigung, Oberflächenaktivierung, Haftvermittler oder Haftvermittlerschichten verstanden.

### Beschreibung der Zeichnungen

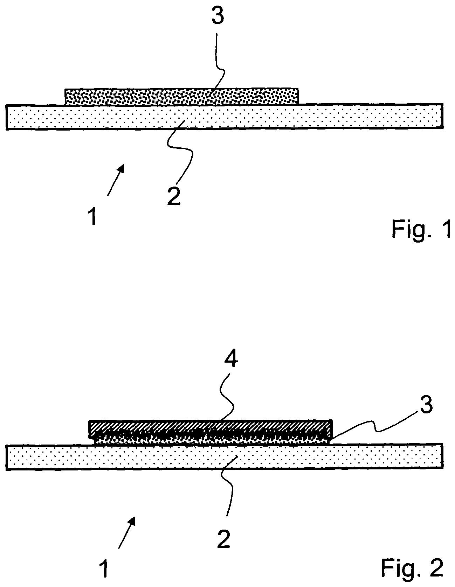

Die Erfindung soll im Folgenden unter Bezugnahme auf die Zeichnungen Fig. 1 bis Fig. 6 näher erläutert werden. Bezugnehmend auf die Figuren Fig. 1 bis Fig. 4 soll die Herstellung eines erfindungsgemäßen Verbundmaterials näher erläutert werden, wobei in den Figuren schematisch die Herstellungsschritte dargestellt sind.

Fig. 1 zeigt ein Verbundmaterial 1, welches ein Substrat 2 umfasst, auf das abschnittsweise eine Sol-Gel-Schicht 3 aufgetragen ist.

Wie in Fig. 2 dargestellt, wird die Sol-Gel-Schicht 3 mittels eines Prägewerkzeugs 4, welches auf die Schicht gedrückt wird, strukturiert.

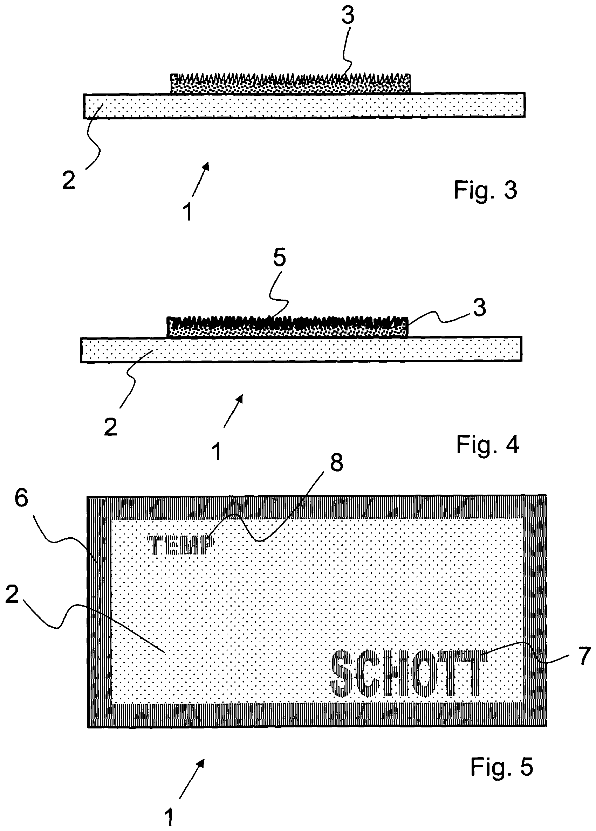

Die strukturierte Sol-Gel-Schicht 3 ist in Fig. 3 dargestellt. Vorzugsweise ist die Struktur der Struktur einer gebürsteten Edelstahlfläche ähnlich.

Sodann wird, wie in Fig. 4 dargestellt, eine Metallschicht 5 auf die strukturierte Sol-Gel-Schicht 3 über ein Sputterverfahren aufgebracht und es entsteht eine Beschichtung mit metallischer Anmutung.

Als Prägewerkzeug kann beispielsweise ein Prägestempel verwendet werden.

Die Sol-Gel-Schicht kann beispielsweise mittels Flüssigbeschichten auf einem Glas- oder Glaskeramiksubstrat aufgebracht werden. Vorzugsweise umfasst die Sol-Gel-Schicht amorphe und/oder hybridische und/oder kristalline Partikel. Über die Partikel und das Sol kann eine Brechzahlanpassung der Schicht an das Substrat 2 oder über weitere darüber liegende Schichten (nicht dargestellt) bereitgestellt werden.

Vorzugsweise wird die Sol-Gel-Schicht 3 mittels eines Siebdruckverfahrens aufgebracht. So können Bereiche, welche nicht strukturiert werden sollen, ausgespart werden und freie Bereiche, welche beispielsweise für ein Display oder eine Bedienfläche benötigt werden, sind nicht mit der Sol-Gel-Schicht versehen und es entfällt in diesen Bereichen eine aufwändige Kontrolle von Schichtunebenheiten, Inhomogenitäten und/oder Verschmutzungen.

Bei einer Ausführungsform der Erfindung wird die Sol-Gel-Schicht 3 vorgehärtet, insbesondere mittels eines photochemischen Prozesses.

Das Prägewerkzeug 4 ist vorzugsweise als Prägestempel ausgebildet, welcher kontinuierlich, insbesondere als Rolle oder als Flächenprägestempel auf die Sol-Gel-Schicht unter einem definierten Druck aufgedruckt wird. Bei einer Ausführungsform der Erfindung wird während des Aufdruckens die Sol-Gel-Schicht 3 gehärtet, insbesondere thermisch oder photochemisch. Insbesondere wenn ein relativ dünnflüssiges Sol verwendet wird, muss der Prägestempel nicht mit einer besonders hohen Kraft aufgedrückt werden, sondern das Sol zieht sich fast von alleine in die Struktur des Prägestempels. Sofern sich zwischen Prägestempel und Sol Blasen bilden, können diese, mittels einer Walze oder mittels Unterdruck entfernt werden.

Als Struktur, unter der insbesondere ein dreidimensionales Oberflächenrelief verstanden wird, kommen sowohl periodische als auch statistische Strukturen in Frage, insbesondere Linien, gebürstete Oberflächen, lichtstreuende Schichten, geätzte Oberflächen, Strukturen, die der besseren Haptik dienen sowie einfache geometrische Körper, wie Pyramiden, invertierte Pyramiden, Würfel, Sphären etc.

Die strukturierte Sol-Gel-Schicht ist in einer besonderen Ausführungsform strukturbestimmend für nachfolgend abgeschiedene Schichten, insbesondere für die erfindungsgemäß aufgetragenen metallhaltigen Schichten, sowie optional noch folgende Schichten.

Die strukturierte Sol-Gel-Schicht 3, welche mit einer Metallschicht 5 versehen ist, wird unter anderem je nach benötigter Temperaturbeständigkeit des Endprodukts bei Temperaturen von 50 bis 1000°C, bevorzugt von 100 bis 800°C gehärtet.

Die Struktur bleibt selbst dann erhalten, wenn organische Bestandteile der Sol-Gel-Schicht vollständig ausgebrannt werden.

Die Tiefe der Struktur in Relation zur Struktur des Prägewerkzeugs nimmt je nach Temperatur und verwendetem Sol-Gel, welches insbesondere Partikel enthält, zwischen 0 und 60 % ab. Dies kann, falls erforderlich, dadurch kompensiert werden, dass ein Prägewerkzeug verwendet wird, das eine höhere Strukturtiefe aufweist als die Strukturtiefe, die eigentlich beabsichtigt ist.

Als Sol-Gel-Vorstufen können insbesondere hydrolisierte und kondensierte Epoxy- oder Methacrylat-funktionalisierte Alkoxysilane verwendet werden. Gefüllt mit Nanopartikeln, insbesondere SiO₂-Nanopartikeln, welche insbesondere als alkoholische Dispersion zugegeben werden, lässt sich ein Schrumpfen unter 25 % erreichen.

Bevorzugt werden im Wesentlichen faserförmig ausgebildete Partikel, ganz besonders SiO2-Partikel, mit einem Durchmesser von 5 bis 15 nm und einer Länge on 5 bis 150 nm verwendet. In anderen Ausführungsformen können auch Mischungen von im Wesentlichen kugelförmigen Partikeln verschiedener Größe von 5 bis 125 nm verwendet werden.

Die metallisch anmutende Schicht 5 kann beispielsweise über ein Abscheideverfahren wie Flüssigphasenabscheidung, CVD oder PVD oder auch als metallischer Lack aufgebracht werden. Vorzugsweise wird die Metallschicht 5 mittels eines Sputterprozesses aufgebracht. Die im Vakuumverfahren aufgebrachten Metallschichten können sowohl vollflächig als auch nur partiell aufgebracht werden. Dabei werden im Sputterprozess nicht beschichtete Bereiche maskiert, zum Beispiel mittels Lack oder mittels einer Blende. Metallisch anmutende Lacke bestehen zumeist aus Acrylharzen, in welchen Metallpigmente vorhanden sind, oder keramische Farben, die neben den farbgebenden Komponenten Flußmittel beinhalten. Solche Lacke oder Lacksysteme werden vorzugsweise über Siebdruck aufgebracht.

Bei einer erfindungsgemäßen Ausführungsform kann diese Lack Schicht aus Lüsterfarben bestehen wie sie zum Beispiel in der US 2007/0056961 oder DE 102008020895 beschrieben sind.

Es ist insbesondere auch denkbar, dass die Metallschicht auch auf nicht strukturierte Bereiche aufgetragen wird und dort eine spiegelnde glänzende Oberfläche entstehen lässt.

Das erfindungsgemäße Verbundmaterial ist insbesondere für Dunstabzugshauben, Bedienblenden, Backofentüren, Dampfgarer, Mikrowellen, Küchenfronten, als Spritzschutz in Küchen, für Glaselemente von elektrischen Kleingeräten, insbesondere Toastern, als Kochfläche, Kaminsichtscheibe aber auch für Architekturanwendungen, Bilderverglasungen, Aufzüge, Gebäudeverglasungen, Trennwände, Türen, Bodenbeläge, Möbel und Konsumer-Elektronik, wie bespielsweise Computer, Mobiltelefone, Bildschirme und im Automobilbau oder Flugzeubau wie bespielsweise für dekorative Anwendungen im Innerbereich der Fahrzeuge wie für das Armaturenbrett, etc. vorgesehen. Als Schichtmaterial der Sol-Gel-Schicht wird vorzugsweise amorphes oder hybridpolymeres SiO₂ verwendet, möglicherweise mit Anteilen an amorphen und oder nanokristallinen oxidischen Metall- oder Metallmischoxiden wie beispielsweise TiO₂, ZrO₂, 8YSZ, Al₂O₃, CeO2, ZnO, ITO oder deren hydridpolymeren Derivate.

In einer besonderen Ausführungsform können auch nichtoxidsche und oder teiloxidische Nanopartikel wie beispielsweise Mgf2, CaF2, Mg2OF2, SiC, SiOC, SiN, SiON verwendet werden.

Die Beschichtungslösung basiert bei einer Ausführungsform auf amorphen oder kristallinen molekular- oder kolloidaldispersen oder hybridpolymeren Sol-Gel-Vorstufen des Silizium, Titan, Zirkon, Aluminium, Zink, Magnesium, Calcium und/oder Zinn, insbesondere SiORxRy TiORxYy, ZrORxXy, AlORxYx, ZnORxYy, MgORxXy, CaORxXy und/oder SnORxX.

Als UV-härtbares Hybridpolymer kann eine hydrolisierte und kondensierte Alkoxysilanvorstufe, mit einer oder mehreren UV-vernetzbaren organischen funktionellen Gruppen, verwendet werden, insbesondere Glycidyloxypropyltriethoxysilan oder Methacryloxypropyltrimethoxysilan. Diese Vorstufe wird als Binder für Nanopartikel, insbesondere oxidische Nanopartikel, ganz besonders SiO₂-Nanopartikel, verwendet.

Bevorzugt werden Nanopartikel verwendet, welche mit einem Binder verbunden werden, dessen Kondensationsgrad mehr als 60 % beträgt. Der Volumenanteil der Nanopartikel ist vorzugsweise größer als 30 %, besonders bevorzugt größer 50 %.

In einer besonderen Ausführungsform wird ein Zweikomponentensystem verwendet. Ein Komponente besteht dabei aus dem hydrolysierten organisch funktionalisierten Silan, beispielsweise einem lösungsmittelreduzierten Hydrolysat aus Tetraalkoxysilan und Glycidyloxypropyltrialkoxysilan. Eine weitere zweite Komponente besteht aus den Metalloxid- und/oder Halbmetalloxidnanopartikeln mit einem Photostarter in einem hochsiedenden Lösungsmittel.

Vor Gebrauch werden beide Komponenten in entsprechendem Verhältnis gemischt und sind für > 24 h verwendbar.

Die thermisch ausgehärtete Sol-Gel-Schicht, welche insbesondere mit einer Temperatur von über 200°C ausgehärtet hat, ist mikro- oder mesoporös und hat eine offene Porosität von 1 bis 50 %. Bei einer thermischen Behandlung mit einer noch höheren Temperatur, beispielsweise 500°C ist die Schicht mesoporös mit einem Porendurchmesser zwischen 2 - 10 nm.

Die erfindungsgemäßen Schichten haben gleichzeitig eine Barrierewirkung gegenüber Diffusion. Die Barrierewirkung kann durch aufbringen einer zusätzlichen Schicht, wie bspw. SiO2 oder SixNy, mit dem Fachmann bekannten Abscheidemethoden noch verstärkt werden. Neben Siebdruck können Tampondruck, Dipcoaten, Rollern, Fluten, Sprühen oder andere Flüssigbeschichtungs-Technologien zum Aufbringen der Sol-Gel-Schicht 3 eingesetzt werden. Der erste Aushärtungsschritt während des Prägevorgangs erfolgt bei einer ersten Ausführungsform der Erfindung thermisch in einem Temperaturbereich von 50 bis 150°C. In einer Ausführungsform erfolgt die Aushärtung während des Prägevorgangs mittels UV-Licht.

Eine endgültige Härtung beziehungsweise ein Einbrennen der ersten, strukturgebenden Schicht erfolgt in einem Temperaturbereich von 50 bis 1000°C, bevorzugt 450 bis 740°C.

Das Prägewerkzeug wird vorzugsweise mit einem Anpressdruck zwischen 0,1 und 5 bar aufgelegt. Ein Aufrollen des Prägewerkzeugs von einer Seite beginnend hat sich dabei als besonders vorteilhaft herausgestellt. Das Prägen kann unter Vakuum stattfinden, um die Gefahr von Blasenbildung zu reduzieren.

Der Flüssigbeschichtungslösung können Verbindungen beigefügt werden, welche eine ent- oder benetzende Wirkung haben.

Vor der Beschichtung des Substrats kann diese beispielsweise mittels eines Primers vorbehandelt werden, um eine bessere Haftung der Sol-Gel-Schicht zu erreichen. In Fig. 5 ist ein Verbundmaterial 1 in der Draufsicht dargestellt.

Eine strukturierte Schicht mit metallischer Anmutung ist als Einfassung 6 auf ein Glassubstrat 2 aufgebracht.

Auch lässt sich eine Beschriftung 7 als Herkunftshinweis oder der Teil einer Temperaturanzeige 8 aufbringen.

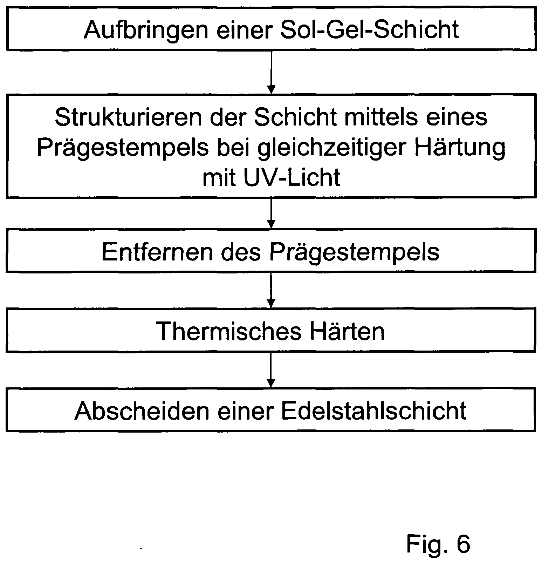

Fig. 6 zeigt schematisch ein Flussbild mit den wesentlichen Verfahrensschritten.

Zunächst wird eine Sol-Gel-Schicht aufgebracht. Die aufgebrachte Sol-Gel-Schicht wird mittels eines Prägestempels bei gleichzeitiger Härtung mit UV-Licht strukturiert. Sodann wird der Prägestempel entfernt und anschließend das Verbundmaterial thermisch gehärtet. Schließlich wird eine Edelstahlschicht mittels eines Sputterverfahrens aufgebracht. Gegebenenfalls können noch weitere Schichten aufgebracht werden.

Im Detail lässt sich ein erfindungsgemäßes Verbundmaterial beispielsweise wie folgt herstellen:

### Beispiel 1:

In einem Gefäß werden GPTES (Glycidyloxypropyltriethoxysilan) mit TEOS (Tetraethoxysilan) vorgelegt und mit Wasser, in welchem PTSH (Paratoluolsulfonsäure) gelöst ist, hydrolysiert. Beispielsweise können 0,08 mol GPTES, 0,02 mol TEOS, 2,3 g Wasser und 0,344 g PTSH verwendet werden.

Nach Rühren wird diesem Hydrolysat eine alkoholische Dispersion von irregulär geformten SiO₂-Nanopartikeln in Isopropanol zugegeben. Beispielsweise können 110 g einer Dispersion mit 15 % Partikeln verwendet werden.

Die Nanopartikel haben beispielsweise eine Faserform mit einem Durchmesser von 5 bis 15 nm und einer Länge von 30 bis 150 nm.

Zu dieser Lösung wird Ethylenglycolmonoethylether (z.B. 13 g) gegeben und das leichtflüchtige Lösungsmittel am Rotationsverdampfer entfernt (z.B. bei 100 mbar und 50 °C Badtemperatur).

Dem so entstandenen Prägesol wird anschließend ein Photostarter zugegeben (z.B. 0,6 g des kationischen Photostarters Irgacure 250 in 1 g
Ethylenglycolmonoethylether).

Mittels Siebdruck können mit dem Lacksystem einseitig Schichten auf Kalknatronglas aufgebracht werden. Beim Siebdruckverfahren kann dazu beispielsweise ein 180 er Gewebe verwendet werden.

Nach Abtrocknen des Lösungsmittels bei Raumtemperatur bis 50 °C mit oder ohne Umluft wird ein strukturierter Prägestempel, insbesondere ein Silikonprägestempel (Polydimethylsiloxan) aufgebracht und die Schicht anschließend mittels einer UV-Lampe durch den UVtransparenten Prägestempel gehärtet.

Nach Entfernen des Prägestempels ist die Struktur des Prägestempels in den mit Nanopartikeln funktionalisierten Lack übertragen worden.

Die Schichten können jetzt bei Temperaturen von 100 bis 800 °C thermisch ausgehärtet werden.

Bevorzugt wird eine Heizrate von 3 K/min mit einer Haltezeit von 1 h bei 500 °C. Die Endschichtdicke beträgt vorzugsweise 2,5 - 3 µm.

Anschließend wird über ein Sputterverfahren eine mindestens 100 nm dicke Edelstahlschicht aufgebracht.

### Beispiel 2:

In einem Gefäß werden 16,7 g (0,06 mol) GPTES (Glycidyloxypropyltriethoxysilan) mit 4,1 g (0,02 mol TEOS (Tetraethoxysilan) und 3,56 g (0,02 mol) MTEOS (Methyltriethoxysilan) vorgelegt und mit 2,3 g Wasser, in welchem 0,344 g PTSH (Paratoluolsulfonsäure) gelöst sind, hydrolysiert.

Nach 2 Min Rühren werden diesem Hydrolysat eine Mischung aus 44 g einer 30 mass-% alkoholischen Dispersion von kugelförmig geformten SiO₂-Nanopartikel mit einem Durchmesser von 40 - 50 nm in Isopropanol und 11 g einer alkoholischen Dispersion von kugelförmigen SiO₂-Nanopartikeln mit einem Durchmesser von 10 -15 nm zugegeben.

Zu dieser Lösung werden 16 g Ethylenglycolmonoethylether gegeben und das leicht flüchtige Lösungsmittel bei 100 mbar und 50 °C Badtemperatur am Rotationsverdampfer entfernt.

Dem Prägesol werden anschließend 0,6 g des kationischen Photostarters Irgacure 250 in 1 g
Ethylenglycolmonoethylether zugegeben.

Mittels Siebdruck unter Verwendung eines 180 er Gewebes können mit dem Lacksystem einseitig Schichten auf Kalknatronglas aufgebracht werden.

Nach Abtrocknen des Lösungsmittels bei Raumtemperatur bis 50 °C mit oder ohne Umluft wird ein strukturierter Silikonprägestempel (PDMS) aufgebracht und anschließend die Schicht mittels einer UV-Lampe durch den Prägestempel ausgehärtet. Nach Entfernen des Prägestempels ist die Struktur des Prägestempels in den Nanopartikel-funktionalisierten Lack übertragen worden.

Die Schichten können jetzt bei Temperaturen von 100 bis 800°C thermisch ausgehärtet werden. Bevorzugt wird eine Heizrate von 3 K/min mit einer Haltezeit von 1 h bei 500 °C. Die Endschichtdicke beträgt 2,5 µm.

Anschließend wird mit einem Sputterverfahren eine mindestens 100 nm dicke Edelstahlschicht aufgebracht. Durch die Erfindung können insbesondere auf sehr einfache Weise mechanisch und thermisch beständige Beschichtungen mit Edelstahlanmutung auf einem Glassubstrat erzeugt werden.

### Beispiel 3:

In einem Gefäß werden 0,08 mol GPTES (Glycidyloxypropyltriethoxysilan) mit 4,1 g (0,02 mol TEOS (Tetraethoxysilan) vorgelegt und mit 2,3 g Wasser, in welchem 0,344 g PTSH (Paratoluolsulfonsäure) gelöst sind, hydrolysiert.

Nach 2 Min Rühren werden diesem Hydrolysat 50 g einer 30 mass-% alkoholischen Dispersion von faserförmig geformten SiO₂-Nanopartikel mit einem Durchmesser von 10 - 20 nm und einer Länge von 40 - 150 nm in Isopropanol zugegeben.

Zu dieser Lösung werden 20 g
Tripropylenglycolmonomethylether gegeben und das leicht flüchtige Lösungsmittel bei 100 mbar und 50 °C Badtemperatur am Rotationsverdampfer entfernt.

Dem Prägesol werden anschließend 1,0 g des kationischen Photostarters Irgacure 250 in 1 g
Ethylenglycolmonoethylether zugegeben.

Mittels Siebdruck unter Verwendung eines 140 er Gewebes können mit dem Lacksystem einseitig strukturiert Schichten auf transparente Glaskeramik aufgebracht werden. Neben vollflächig strukturierten Bereichen werden auch bereiche mit Strukturelementen mit Linienbreiten von 0,5 mm, 1 mm, 10 mm realisiert.

Nach Abtrocknen des Lösungsmittels mittels IR-Strahlung wird ein strukturierter Silikonprägestempel (PDMS) aufgebracht und anschließend mittels einer UV-Lampe durch den Prägestempel ausgehärtet. Nach Entfernen des Prägestempels ist die Struktur des Prägestempels in den Nanopartikel-funktionalisierten Lack übertragen worden.

Die Schichten werden jetzt bei einer Temperatur von 700 °C thermisch für 4 Min ausgehärtet. Die mittlere Endschichtdicke beträgt 3 µm.

Anschließend wird mittels eines Siebdruckverfahrens unter Verwendung eines 140 er Siebes eine mindestens 50 nm dicke schwarze Lüsterfarbe aufgebracht.

Als Kratzschutzschicht wird anschließend noch eine weitere Schutzschicht auf Basis eines pigmentierten Methylpolysiloxanharzes gelöst in Carbitolacetat mittels Siebdruck aufgebracht. Diese Schicht wird bei 230 °C für 1 h gehärtet.

Durch die Erfindung können insbesondere auf sehr einfache Weise mechanisch und thermisch beständige Beschichtungen mit gebürsteter metallischer Anmutung auf einem Glassubstrat erzeugt werden.

## Patentansprüche

1. Verfahren zur Herstellung eines Verbundmaterials mit mindestens zwei Schichten, insbesondere eines Glas- oder Glaskeramikverbundmaterials mit metallischer dekorativer Anmutung, umfassend die Schritte:
- Aufbringen einer Schicht auf einem Substrat, die aus Sol-Gel und / oder Polysiloxan besteht,
- Aufbringen eines Prägestempels,
- Aushärtung während eines Prägevorgangs mittels UV-Licht,
- Entfernen des Prägestempels,
- Aufbringen einer metallisch anmutenden Schicht auf der strukturierten Schicht.

2. Verfahren zur Herstellung eines Verbundmaterials nach dem vorstehenden Anspruch, **dadurch gekennzeichnet, dass** als Metall umfassende Schicht eine dekorative Schicht abgeschieden wird, insbesondere mittels eine Flüssigphasenbeschichtungs-Prozesses, oder eines PVD- oder CVD-Verfahrens.

3. Verfahren zur Herstellung eines Verbundmaterials nach einem der vorstehenden Ansprüche, **dadurch gekennzeichnet, dass** dem für die Sol-Gel-Schicht verwendeten Sol Partikel, insbesondere Nanopartikel, zugesetzt werden.

4. Verfahren zur Herstellung eines Verbundmaterials nach einem der vorstehenden Ansprüche, **dadurch gekennzeichnet, dass** das Volumenverhältnis von Partikeln zu Vorprodukt der Sol-Gel-Schicht 0,1 bis 0,9, bevorzugt 0,5 bis 0,8 beträgt.

5. Verfahren zur Herstellung eines Verbundmaterials nach einem der vorstehenden Ansprüche, **dadurch gekennzeichnet, dass** die Sol-Gel-Schicht thermisch gehärtet wird, insbesondere bei 50 bis 1000 °C, bevorzugt bei 100 bis 800 °C, besonders bevorzugt bei 450 bis 740 °C.

6. Verfahren zur Herstellung eines Verbundmaterials nach dem vorstehenden Anspruch, **dadurch gekennzeichnet, dass** die Struktur des Prägewerkzeugs einer gebürsteten Metallfläche gleicht.

7. Verfahren zur Herstellung eines Verbundmaterials nach einem der vorstehenden Ansprüche, **dadurch gekennzeichnet, dass** die Sol-Gel-Schicht auf das Substrat gedruckt wird, insbesondere mittels eines Siebdruckverfahrens.

8. Verfahren zur Herstellung eines Verbundmaterials nach dem vorstehenden Anspruch, **dadurch gekennzeichnet, dass** eine Oberfläche des Substrats abschnittsweise bedruckt wird, derart dass zumindest ein Bereich des Substrats ausgespart wird.

9. Küchengerät mit einem Verbundmaterial, umfassend ein Substrat, insbesondere ein Glas- oder Glaskeramiksubstrat, auf welchem eine zumindest teilweise anorganisch ausgebildete Schicht angeordnet ist, wobei die zumindest teilweise anorganisch ausgebildete Schicht strukturiert ist und wobei auf der anorganisch ausgebildeten Schicht eine metallisch anmutende Schicht angeordnet ist.

10. Küchengerät nach dem vorstehenden Anspruch, **dadurch gekennzeichnet, dass** die Strukturtiefe der zumindest teilweise anorganisch ausgebildeten strukturierten Schicht zwischen 50 nm und 1 mm, vorzugsweise zwischen 50 nm und 10 *µ*m beträgt.

11. Küchengerät nach einem der Ansprüche 9 oder 10, **dadurch gekennzeichnet, dass** die zumindest teilweise anorganisch ausgebildete Schicht zwischen 0,05 und 2 *µ*m dick ist.

12. Küchengerät nach einem der Ansprüche 9 bis 11, **dadurch gekennzeichnet, dass** die metallisch anmutende Schicht zwischen 10 nm und 100 *µ*m, bevorzugt zwischen 5 nm und 50 *µ*m, besonders bevorzugt zwischen 80 nm und 30 *µ*m dick ist.

13. Küchengerät nach einem der Ansprüche 9 bis 12, **dadurch gekennzeichnet, dass** zumindest die ein Metall umfassende Schicht eine Oberfläche des Substrats abschnittsweise bedeckt, derart dass Bereiche des Substrats ausgespart sind.

14. Küchengerät nach einem der Ansprüche 9 bis 13, **dadurch gekennzeichnet, dass** die Brechzahl der teilweise anorganisch ausgebildeten Schicht sich von der Brechzahl des Substrats weniger als 0,3, vorzugsweise weniger als 0,2 unterscheidet.

## Claims

1. A method for producing a composite material having at least two layers, in particular a glass or glass ceramic composite material with a metallic decorative appearance, comprising the steps of:
- applying a layer onto a substrate, said layer consisting of a sol-gel and/or a polysiloxane;
- applying an embossing stamp;
- curing during an embossing operation using UV light;
- removing the embossing stamp;
- applying a metallic-looking layer onto the patterned layer.

2. The method for producing a composite material according to the preceding claim, **characterised in that** the metallic-containing layer is deposited as a decorative layer, in particular using a liquid phase coating process, or a PVD or CVD process.

3. The method for producing a composite material according to any of the preceding claims, **characterised in that** particles, in particular nanoparticles, are added to the sol that is used for the sol-gel layer.

4. The method for producing a composite material according to any of the preceding claims, **characterised in that** the volume fraction of particles to a precursor of the sol-gel layer is from 0.1 to 0.9, preferably from 0.5 to 0.8.

5. The method for producing a composite material according to any of the preceding claims, **characterised in that** the sol-gel layer is cured thermally, in particular between 50 °C and 1000 °C, preferably between 100 °C and 800 °C, more preferably between 450 °C and 740 °C.

6. The method for producing a composite material according to the preceding claim, **characterised in that** the pattern of the embossing tool is similar to a brushed metal surface.

7. The method for producing a composite material according to any of the preceding claims, **characterised in that** the sol-gel layer is printed onto the substrate, in particular using a screen printing technique.

8. The method for producing a composite material according to the preceding claim, **characterised in that** a surface of the substrate is printed in sections thereof, such that at least one area of the substrate is excluded.

9. A kitchen appliance with a composite material, comprising a substrate, in particular a glass or glass ceramic substrate on which an at least partially inorganic layer is disposed, wherein said at least partially inorganic layer is patterned, and wherein a metallic-looking layer is disposed on said inorganic layer.

10. The kitchen appliance according to the preceding claim, **characterised in that** the pattern depth of the at least partially inorganic patterned layer is between 50 nm and 1 mm, preferably between 50 nm and 10 µm.

11. The kitchen appliance according to any of claims 9 or 10, **characterised in that** the at least partially inorganic layer has a thickness between 0.05 and 2 µm.

12. The kitchen appliance according to any of claims 9 to 11, **characterised in that** the metallic-looking layer has a thickness between 10 nm and 100 µm, preferably between 50 nm and 50 µm, more preferably between 80 nm and 30 µm.

13. The kitchen appliance according to any of claims 9 to 12, **characterised in that** at least the metal-containing layer covers sections of a surface of the substrate, such that areas of the substrate are excluded.

14. The kitchen appliance according to any of claims 9 to 13, **characterised in that** the refractive index of the partially inorganic layer differs from the refractive index of the substrate by less than 0.3, preferably by less than 0.2.

## Revendications

1. Procédé de fabrication d'un matériau composite présentant au moins deux couches, en particulier d'un matériau composite en verre ou en vitrocéramique à l'aspect décoratif métallique, comprenant les étapes consistant à :
- appliquer une couche sur un substrat qui se compose d'un sol-gel et/ou d'un polysiloxane,
- appliquer un poinçon d'estampage,
- durcir pendant l'opération d'estampage au moyen de la lumière UV,
- enlever le poinçon d'estampage,
- déposer une couche d'aspect métallique sur la couche structurée.

2. Procédé de fabrication d'un matériau composite selon la revendication précédente, **caractérisé en ce qu'**une couche décorative est déposée comme couche comprenant du métal, en particulier au moyen d'un procédé de dépôt en phases liquides ou d'un procédé PVD ou CVD.

3. Procédé de fabrication d'un matériau composite selon l'une des revendications précédentes, **caractérisé en ce que** des particules, en particulier des nanoparticules, sont ajoutées au sol utilisé pour la couche de sol-gel.

4. Procédé de fabrication d'un matériau composite selon l'une des revendications précédentes, **caractérisé en ce que** le rapport volumique entre les particules et le précurseur de la couche de sol-gel va de 0,1 à 0,9, de préférence de 0,5 à 0,8.

5. Procédé de fabrication d'un matériau composite selon l'une des revendications précédentes, **caractérisé en ce que** la couche de sol-gel est durcie thermiquement, en particulier à une température allant de 50 à 1 000°C, de préférence de 100 à 800°C, particulièrement de préférence de 450 à 740°C.

6. Procédé de fabrication d'un matériau composite selon la revendication précédente, **caractérisé en ce que** la structure de l'outil d'estampage ressemble à une surface métallique brossée.

7. Procédé de fabrication d'un matériau composite selon l'une des revendications précédentes, **caractérisé en ce que** la couche de sol-gel est imprimée sur le substrat, en particulier au moyen d'un procédé sérigraphique.

8. Procédé de fabrication d'un matériau composite selon la revendication précédente, **caractérisé en ce qu'**une surface du substrat est imprimée par endroit de telle sorte qu'au moins une zone du substrat est épargnée.

9. Appareil de cuisson muni d'un matériau composite comprenant un substrat, en particulier un substrat en verre ou en vitrocéramique, sur lequel est disposée une couche de configuration au moins partiellement inorganique, dans lequel la couche de configuration au moins partiellement inorganique est structurée et dans lequel une couche d'aspect métallique est disposée sur la couche de configuration inorganique.

10. Appareil de cuisson selon la revendication précédente, **caractérisé en ce que** la profondeur de structure de la couche structurée de configuration au moins partiellement inorganique se situe entre 50 nm et 1 mm, de préférence entre 50 nm et 10 µm.

11. Appareil de cuisson selon l'une des revendications 9 et 10, **caractérisé en ce que** la couche de configuration au moins partiellement inorganique présente une épaisseur entre 0,05 et 2 µm.

12. Appareil de cuisson selon l'une des revendications 9 à 11, **caractérisé en ce que** la couche d'aspect métallique présente une épaisseur entre 10 nm et 100 µm, de préférence entre 5 nm et 50 µm, particulièrement de préférence entre 80 nm et 30 µm.

13. Appareil de cuisson selon l'une des revendications 9 à 12, **caractérisé en ce qu'**au moins la couche comprenant un métal recouvre une surface du substrat par endroits de telle sorte que des zones du substrat soient épargnées.

14. Appareil de cuisson selon l'une des revendications 9 à 13, **caractérisé en ce que** l'indice de réfraction de la couche de configuration partiellement inorganique se distingue de l'indice de réfraction du substrat de moins de 0,3, de préférence de moins de 0,2.
